# EUROPÄISCHE PATENTSCHRIFT

(11) **EP 2 149 289 B1**
(45) Veröffentlichungstag und Bekanntmachung des Hinweises auf die Patenterteilung: **09.09.2015**
(21) Anmeldenummer: 09009404.6
(22) Anmeldetag: 20.07.2009
(51) Int. Cl.: A01D 43/08

(54) **Vorsatzgerät zum Ernten von stängeligem Erntegut**
Auxiliary device for harvesting stalk crops
Tête de récolte pour récolter des plantes à tiges

(30) Priorität: 28.07.2008 DE 102008035191
(43) Veröffentlichungstag der Anmeldung: 03.02.2010
(73) Patentinhaber: CLAAS Saulgau GmbH, 88348 Bad Saulgau (DE)
(72) Erfinder: Albinger, Bernd, 88454 Hochdorf (DE); Plank, Alexander, 88348 Bad Saulgau (DE); Stremlau, Björn, 49509 Recke (DE); Wicker, Anton, 88348 Bad Saulgau (DE); Winkler, Martin, 88348 Bad Saulgau (DE)

(56) Entgegenhaltungen:
- EP-A- 1 946 632
- EP-A- 2 071 934
- DE-U1- 29 623 894
- DE-U1- 29 702 902

## Beschreibung

Die Erfindung betrifft ein Vorsatzgerät zum Ernten von stängeligem Erntegut für landwirtschaftliche Erntemaschinen, insbesondere für Feldhäcksler zum Mähen, Aufnehmen und Weiterführen eines stängelartigen Erntegutstroms, beispielsweise für Maispflanzen, in den Einzugsspalt des Einzugsgehäuses gemäß dem Oberbegriff des unabhängigen Anspruchs 1.

### Stand der Technik

Bekannt sind diese Vorsatzgeräte insbesondere auch unter dem Begriff Malsgebisse. Diese sind dem Fachmann in verschiedenen Ausführungen bekannt. Die Aufgabe dieser Vorsatzgeräte für Feldhäcksler besteht darin, die stehenden Maispflanzen während der Vorwärtsfahrt abzumähen und die abgemähten aufgenommen werden und quer zur Fahrtrichtung verlaufend hin zur Mitte des Vorsatzgeräts gefördert werden. Der Aufwand, sowohl antriebetechniech, als auch gewichtsmäßig und monetär für derartige Querförderelemente ist erheblich und damit von Nachteil. Insbesondere der gewichtsmäßige Anteil der Querförderelemente verursacht der Vorderachsbelastung insofern eine erhebliche Lastzunahme, da hier nicht nur das Gewicht der Querförderelemente und deren Antriebselemente auf diese einwirken, sondern well sich hier der weiter vorgelagerte Schwerpunktsabstand des Vorsatzgerätes unter Berücksichtigung der Hebelverhältnisse als zusätzlicher Verstärker zur Vorderachsbelastung drastisch auswirkt.

Aus der DE 296 23 894 U1 sind Vorsatzgerate gemäß dem Oberbegriff des Anspruches 1 bekannt. Die Druckschrift zeigt ein Vorsatzgerät mit einer Anzahl von Mäh- und Fördertrommeln, die einen mäanderförmigen Gutstrom von der am weitesten entfernten Mäh- und Fördertrommel hin zu dem Einzugsspalt führt.

Die EP 1946632 A1 zeigt einen weiteren Stand der Technik.

### Aufgabenstellung

Hier setzt die Aufgabe der Erfindung an mit dem Ziel, das Eigengewicht des Vorsatzgerätes zu senken, um damit die Vorderachsbelastung des Trägerfahrzeuges herabzusetzen. Ein weiteres Ziel besteht darin, das Vorsatzgerät kostengünstiger herstellen zu können, welches zugleich einen wirtschaftlichen Vorteil beinhalten würde.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

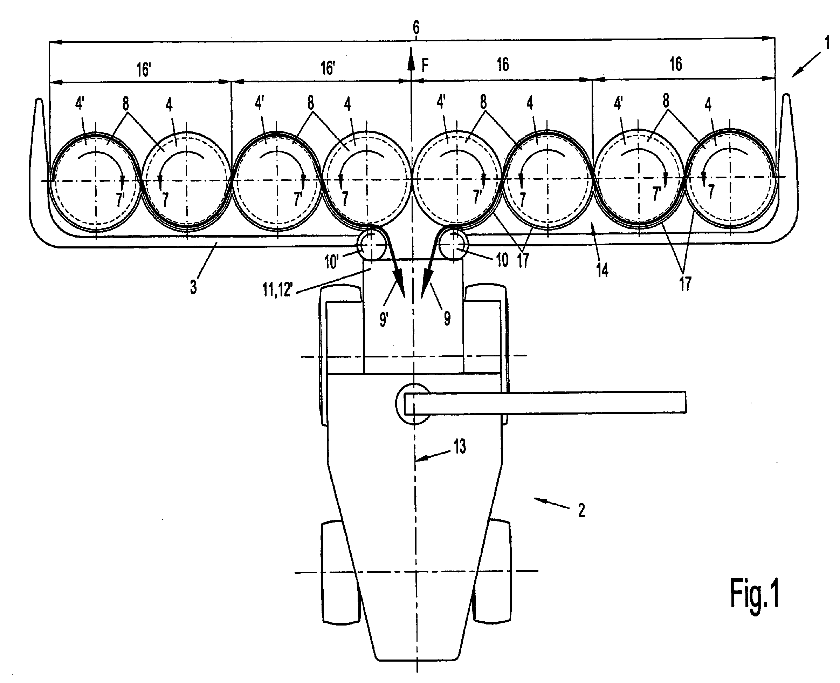

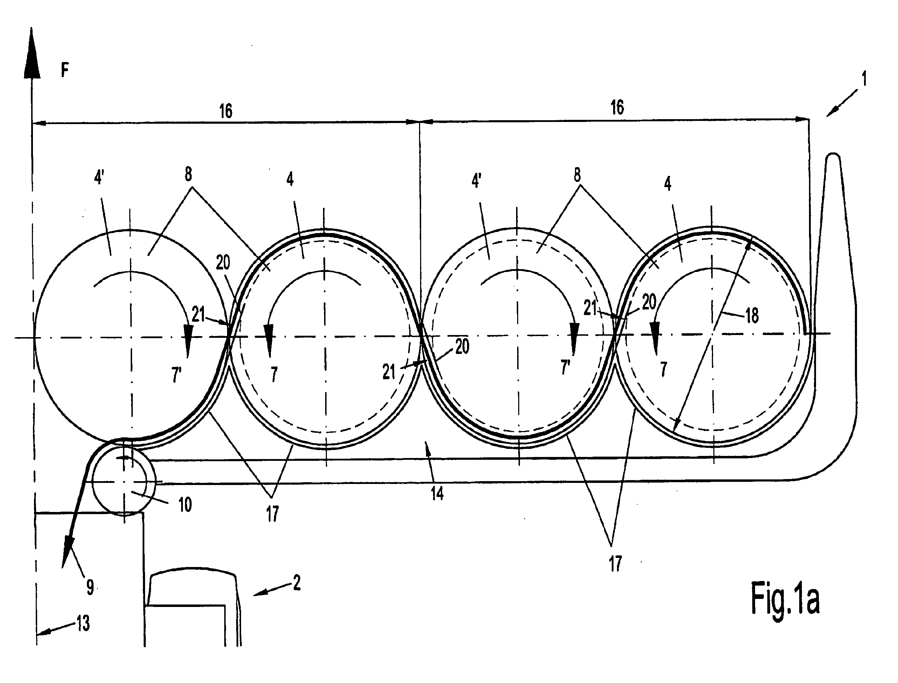

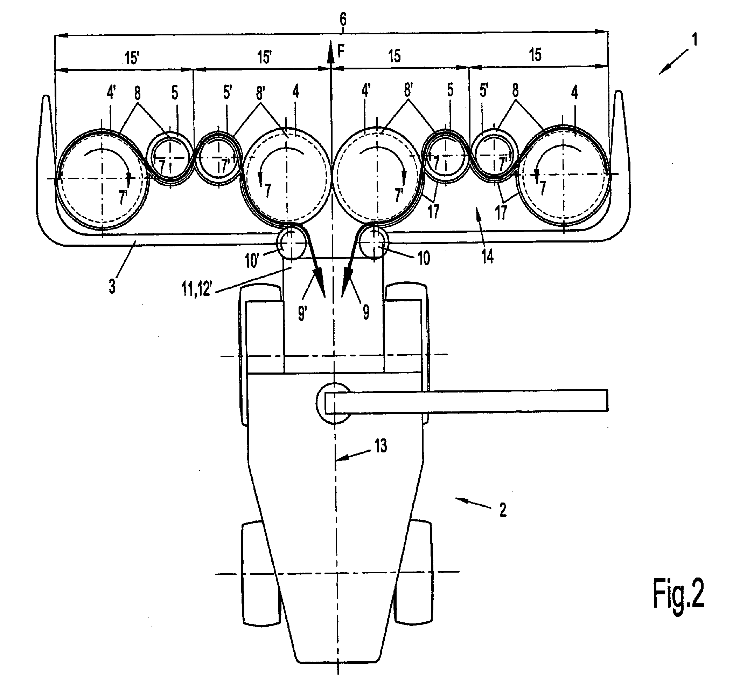

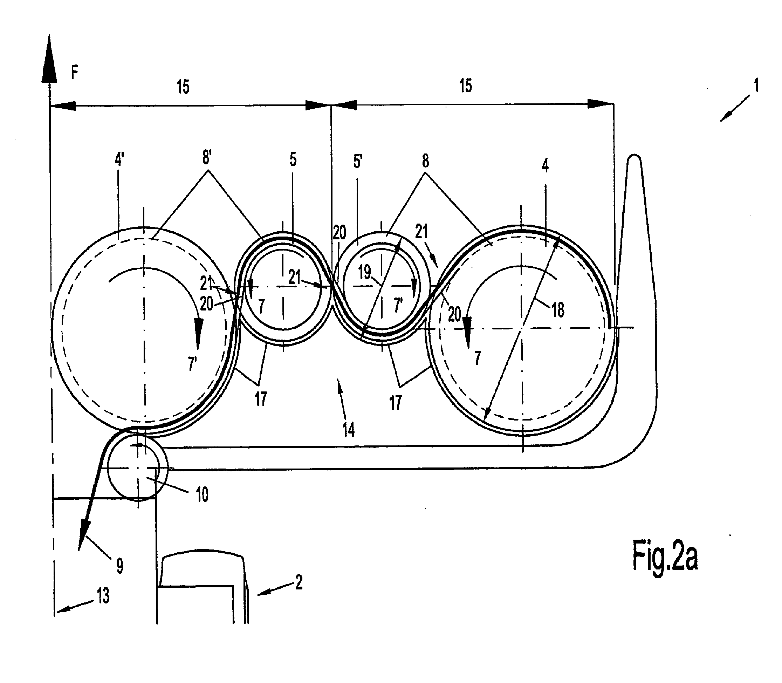

In den Figurendarstellungen Fig.1 und Fig.2 sind verschiedene Ausführungen eines Vorsatzgeräts 1 mit Mäh- und Fördertrommeln 4,4',5.5' bzw. verschiedene Konfigurationen von Fördertrommelpaaren 8,8' beispielhaft dargestellt. Das Vorsatzgerät 1 stellt ein Maisgebiss dar, welches von einem Trägerfahrzeug 1, ausgebildet als Feldhäcksler, In Fahrtrichtung F frontseitig vorgelagert, aufgenommen ist. Die Mäh- und Fördertrommeln 4,4',5,5' werden in an sich bekannter Weise von einem Maschinengestell 3 aufgenommen und gelagert und sie werden umlaufend gemäß ihren Drehrichtungen 7,7' vom Trägerfahrzeug 1 angetrieben.

In den Figuren Fig.1 a und Fig.2a sind vergrößerte Ausschnitte anhand der jeweils rechten Hälfte des Vorsatzgerätes 1 dargestellt

Erfindungsgemäß kommt ein Vorsatzgerät 1 nach der Erfindung ohne die sonst vorhandenen Querförderelemente im rückwärtigen Bereich 14 der Mäh- und Fördertrommeln 4,4',5,5' aus. Der Einfachheit halber sind die Mäh- und Fördertrommeln lediglich als Konturenkreise mit ihren Konturkreisdurchmessern 18,19 dargestellt, welches das Wesen der Erfindung hinreichend und dem Fachmann ohnehin verständlich darstellt.

Letzteres bedeutet, dass die Mäh- und Fördertrommeln 4,4',5.5' nunmehr selber die Aufgabe der ursprünglich vorhandenen Querförderelemente, nämlich den besagten Querfördertransport des Gutstroms 9,9', mit übernehmen. Lediglich die Übergabe der quergeförderten Maispflanzen an den Einzugsspalt 12 des Einzugsgehäuses 11 mit den Einzugswalzen des Feldhäckslers 1 wird von vorgelagerten Umlenkfördertrommeln 10,10' beidseitig des Einzugsspalts 12 unterstützt.

Die Anzahl der Mäh- und Fördertrommeln 4,4',5,5' eines Vorsatzgerätes 1 nach der Erfindung betragen dabei unabhängig von der Arbeitsbreite 6 des Vorsatzgerätes 1 ein ganzzahliges Vielfaches der Zahl Vier. Dabei arbeiten immer zwei Mäh- und Fördertrommeln 4,4'; 4,5'; 4',5, paarweise gegenläufig zueinander umlaufend angetrieben, als Mäh- und Fördertrommelpaar 8;8' zusammen und übergeben den Gutstrom 9,9' an das nächst weiter innenliegende Mäh- und Fördertrommelpaar 8;8'. Ein Mäh- und Fördertrommelpaar 8;8' definiert dabei jeweils einen Mäh- und Einzugsbereich 15,15',16,16'. Im rückwärtigen Bereich 14 sind die Mäh- und Fördertrommeln 4,4',5,5' von einer aufrechten Leitwand 17 umgeben, damit die Pflanzenstängel sicher in den Mäh- und Fördertrommeln während ihres Querfördertransports gehalten werden.

Die Anordnung bzw. Konfiguration der Mäh- und Fördertrommelpaare 8;8' ist beidseitig der vertikalen Längsmittelebene 13 des Vorsatzgeräts 1 spiegelsymmetrisch zueinander ausgebildet.

Durch die Gegenläufigkeit der Drehrichtungen 7,7' der Mäh- und Fördertrommeln 4,4',5,5'eines Mäh- und Fördertrommelpaares 8;8' tangieren sich die benachbarten Mäh- und Fördertrommelpaare 8;8' näherungsweise und definieren dort einen Übergabebereich 21, innerhalb dessen die Maispflanzen von der weiter außenliegenden zur weiter innenliegenden Mäh- und Fördertrommel mittels eines Ausräumerelements 20 übergeben werden.

Dieses bewirkt, dass die Förderrichtung des Gutstroms 9,9' ohne Umlenkelemente während der Übergabe erhalten bleibt. Die Anzahl der Mäh- und Fördertrommelpaare 8;8', welche die gesamte Arbeitsbreite 6 des Vorsatzgerätes überstreichen, beträgt demnach das 2-fache des ganzzahligen Vierfachen der Zahl 4 in bezug auf die Anzahl der Mäh- und Fördertrommeln 4,4';5,5, wie zuvor dargelegt.

Somit mäht jedes Mäh- und Fördertrommelpaar 8,8' die Pflanzenstängel innerhalb seines Mäh- und Einzugsbereichs 16,16' von den Wurzelstöcken ab, zieht die abgemähten Pflanzen in bekannter Weise in die Fördertaschen der Mäh- und Fördertrommeln 4,4';5,5' ein und fördert sie dabei quer zur Fahrtrichtung F weiter und übergibt diese dabei innerhalb der Übergangsbereiche 21 an das nächste in Bezug auf die vertikale Längsmittelebene 13 weiter innenliegende Mäh- und Fördertrommelpaar 8,8' und fördert die Pflanzen damit zuletzt an die Umlenkfördertrommeln 10,10' weiter. Die Gutströme 9,9' der abgemähten Pflanzen beschreiben somit während ihrer zurückgelegten Wegstrecke eine mäanderförmige Bahn in näherungsweise aufrechter Haltung, wobei sie von den dem Einzugspalt 12 des Einzugsgehäuses 11 direkt vorgelagerten Mäh- und Fördertrommeln in Richtung Umlenkfördertrommeln 10,10' gefördert und an diese übergeben werden, um von diesen in eine etwa horizontale Lage umgelenkt zu werden und damit dem Einzugsspalt 12 zugeführt zu werden.

Dabei können alle Mäh- und Fördertrommeln 4,4';5,5' gleiche Konturkreisdurchmesser 18,19 aufweisen oder alternativ auch unterschiedliche Konturkreisdurchmesser 18,19 aufweisen, bzw. ebenso können die Mäh- und Fördertrommelpaare 8,8' sich aus Mäh- und Fördertrommeln 4,4';5,5' gleicher oder unterschiedlicher Konturkreisdurchmesser 18,19 zusammensetzen.

Fig.1 und Fig.2 zeigen unterschiedliche Ausführungsbeispiele mit in beiden Ausführungsformen je acht Mäh- und Fördertrommeln, jedoch ist die Zusammensetzung der Fördertrommelpaare 8,8' hinsichtlich ihrer Konturkreisdurchmesser 18,19 unterschiedlich. Im Ausführungsbeispiel der Fig.1 sind dabei alle Konturenkreise untereinander im Konturkreisdurchmesser gleich groß, wohingegen im Ausführungsbeispiel Fig.2 die Konturkreisdurchmesser der jeweiligen Trommelpaare unterschiedlich groß sind. Fig.1 a zeigt dieses in einer vergrößerten Darstellung in Bezug aus die Fig.1 und Fig.2a anlog in einer vergrößerten Darstellung in Bezug auf die Fig.2.

Fig.1 symbolisiert eine Arbeitsbreite 6 beispielsweise von 12m und Fig.2 eine Arbeitsbreite 6 von beispielsweise 9m. Prinzipiell kann aber mit beiden Konfigurationen jede beliebige Arbeitsbreite 6 verwirklicht werden.

Ein weiterer erfindungsgemäßer Vorteil der Kombination und Konfiguration verschieden großer in modularer Form aufeinander abgestimmter Konturkreisdurchmesser 15,16, bzw. 15',16' besteht darin, dass es möglich ist, mit einer minimalen Anzahl von Mäh- und Fördertrommeln 4,4',5,5' eine möglichst große Arbeitsbreite 6 ebenfalls modular mit einem konstanten Stufensprung zu gestalten, und dieses dem Wesen nach mit zwei Grundelementen von Mäh- und Fördertrommeln 4,4',5.5' bezüglich ihrer Konturkreisdurchmesser 18,19.

Dem zugrunde liegt die zuvor genannte Auslegung der Anzahl der Mäh- und Fördertrommeln 4,4',5.5' pro Vorsatzgerät 1, nämlich dass die Anzahl bzw. Summe ein ganzzahliges Vielfaches der natürlichen Zahl Vier ist. Der Modul des Stufensprungs einer so definierten Baureihe ist durch den kleinsten Konturkreisdurchmesser 19 definiert. Der größere Konturkreisdurchmesser 18 beträgt dann etwa das 2-fache dieses Moduls bzw. des kleineren Konturkreisdurchmessers 19. Mit dieser Anzahl lassen sich dann Mäh- und Fördertrommelpaare 8,8' bilden, deren Summe wiederum die Hälfte der Summe der Mäh- und Fördertrommeln 4,4',5,5' beträgt.

### Beispielhaft sei dieses wie folgt erläutert:

Die Arbeitsbreite 6 eines Vorsatzgerätes soll 6 Meter betragen und Teil einer modularen Baureihe sein. Die Anzahl der Mäh- und Fördertrommeln soll dabei das 2-fache der Zahl Vier und damit die natürliche Zahl Acht betragen. Alle Mäh- und Fördertrommeln sollen den gleichen Konturkreisdurchmesser 18 mit dem theoretischen Konturkreisdurchmesser dₘᵢₙ aufweisen. Die Einschränkung auf die Definition des "theoretischen" Konturkreisdurchmesser berücksichtigt die Tatsache, dass die tatsächlichen Konturkreisdurchmesser 18,19 geringfügig kleiner sind als "theoretischen" Konturkreisdurchmesser, welche sich per Definition tatsächlich tangieren, welches aber bei den realen Konturkreisdurchmesser 18,19 in der Praxis nicht erwünscht ist. Somit beträgt der theoretische Konturkreisdurchmesser dₘᵢₙ = 6m / (2*4) = 0.75Meter, welcher nunmehr per Definition der Modul m dieser Baureihe sein soll, und welches nichts anders besagt als m = dₘᵢₙ.

Damit lassen sich nun die Arbeitsbreiten 9 bzw A einer modularen Baureihe nach vorgegebener Definition wie folgt bestimmen.
1. minimale Arbeitsbreite (6) A = 1 * 4 * 0,75m = 3m
2. mögliche Arbeitsbreite (6) A = 2 * 4 * 0,75m = 6m
3. mögliche Arbeitsbreite (6) A = 3 * 4 * 0,75m = 9m
4. mögliche Arbeitsbreite (6) A = 4 * 4 * 0,75m = 12m usw.

Mathematisch ausgedrückt kann dieses wie folgt anhand einer Reihenfunktion wie folgt dargestellt werden:
A = 4x * m mit x = ganzzahlig und x = 1,2,3,4...n, usw. als aufsteigende Reihe der natürlichen Zahlen

Unter der Bedingung, dass die Anzahl der Mäh- und Förderscheiben ein ganzzahliges Vielfaches der Zahl Vier sein soll, können nun z.B. 12 Mäh- und Fördertrommeln auch durch die Zahl 8 ersetzt werden, wobei dann allerdings der Konturkreisdurchmesser einiger oder aller Mäh- und Fördertrommeln vergrößert werden muss, damit diese Ausgangsbedingung wieder erfüllt ist. Dieses ist nur dann möglich, wenn in dem vergrößerten Konturkreisdurchmesser dₘₐₓ ein ganzzahliges Vielfaches des Moduls enthalten ist. Zusätzlich muss dabei erfindungsgemäß die Bedingung erfüllt sein, dass die Anzahl der Mäh- und Fördertrommelpaare dem halben Wert der Anzahl der Mäh- und Fördertrommeln entspricht. Dieses ist dann dadurch zu realisieren, indem die nunmehr größeren theoretischen Konturkreisdurchmesser dₘₐₓ einiger oder aller Mäh- und Fördertrommeln dem 2-fachen des zuvor definierten Moduls m entspricht.

Den beiden dargestellten Ausführungsbeispielen gemäß Fig.1 und Fig.2 liegt der gleiche Modul m zugrunde. Das Ausführungsbeispiel gemäß Fig.1 symbolisiert dabei eine Arbeitsbreite 6 von 12m und das Ausführungsbeispiel gemäß Fig.2 symbolisiert Arbeitsbreite 6 von 9m. Die größeren Mäh- und Fördertrommeln 4,4 finden sich in beiden Ausführungsbeispielen wieder. Die kleineren Mäh- und Fördertrommeln 5,5' geben damit den Modul m vor, welches nichts anderes bedeutet, als dass der theoretische Konturkreisdurchmesser das zweifache des Moduls m beträgt.

Sowohl das Ausführungsbeispiel gemäß Fig. 1 als auch das der Fig.2 gehorcht damit den zuvor genannten Bedingungen der Reihenfunktion und nach diesen lässt sich die besagte modulare Baureihe entwickeln.

Ein besonderer Vorteil der erfindungsgemäßen Konfiguration der Mäh- und Fördertrommeln 4,4',5,5' und deren Mäh- und Fördertrommelpaare 8,8' besteht auch darin, dass die am weitesten außenliegende Mäh- und Fördertrommel derart zur Maschinenmitte bzw. in Richtung vertikale Längsmittelebene 13 quer fördert, dass der Gutstrom 9,9' direkt zur vertikalen Längsmittelebene 13 hin bewegt bzw. gefördert wird.

Durch die Art der mäanderförmigen Ausgestaltung der Querförderung der Gutströme 9,9' und damit durch die Entbehrlichkeit der Querförderelemente, in Verbindung mit der Konfiguration der Drehrichtungen 7,7' und der Bildung und Ausgestaltung der Mäh- und Fördertrommelpaare 8,8', lässt sich somit erfindungsgemäß eine deutliche Gewichts- und Kostenreduzierung verwirklichen. Zusätzlich lässt sich dabei eine ebenfalls erfindungsgemäße modulare, mit dem Stufensprung des ganzzahligen des 4-fachen des kleinsten Konturkreisdurchmessers 19 als Modul m eine ebenso modulare Baureihe kostengünstig und damit besonders wirtschaftlich darstellen.

### Bezugszeichenliste

- 1: Vorsatzgerät
- 2: Trägerfahrzeug, Feldhäcksler
- 3: Maschinengestell
- 4,4': große Mäh- und Fördertrommel
- 5,5': kleine Mäh- und Fördertrommel
- 6: Arbeitsbreite
- 7;7': Drehrichtung
- 8,8': Mäh- und Fördertrommelpaar
- 9,9': Gutstrom
- 10,10': Umlenkfördertrommel
- 11: Einzugsgehäuse
- 12: Einzugsspalt
- 13: vertikale Längsmittelebene
- 14: rückwärtiger Bereich
- 15,15': Mäh- und Einzugsbereich
- 16,16': Mäh- und Einzugsbereich
- 17: Leitwand
- 18: großer Konturkreisdurchmesser
- 19: kleiner Konturkreisdurchmesser
- 20: Ausräumelement
- 21: Übergabebereich
- F: Fahrtrichtung

## Patentansprüche

1. Vorsatzgerät (1) für landwirtschaftliche Erntemaschinen, insbesondere für Feldhäcksler zum Mähen, Aufnehmen und Weiterführen eines stängelartigen Erntegutstroms in den Einzugsspalt des Einzugsgehäuses der weiterverarbeitenden Erntemaschine, mit einer Anzahl von wenigstens je zwei beidseitig der vertikalen Längsmittelebene beabstandeten um Hochachsen umlaufend und teilweise gegenläufig zueinander angetriebenen Mäh- und Fördertrommeln (4,4',5,5'), wobei die Anzahl der Mäh- und Fördertrommeln (4,4',5,5') ein ganzzahliges Vielfaches der Zahl Vier beträgt und wenigstens vier Mäh- und Fördertrommelpaare (8,8') umfasst, wobei die Anzahl der Mäh- und Fördertrommelpaare (8,8') die Hälfte der Anzahl der Mäh- und Fördertrommeln (4,4',5.5') beträgt, und wobei der Gutstrom (9,9') mäanderförmig, ausgehend von der der vertikalen Längsmittelebene des Vorsatzgerätes (1) am weitesten entfernten, jeweils äußeren Mäh- und Fördertrommel (4,4',5,5') dem Einzugsspalt (12) zugeführt wird, **dadurch gekennzeichnet, dass** jedes Mäh- und Fördertrommelpaar (8,8') zwei gegenläufig zueinender umlaufend angetriebene Mäh- und Fördertrommeln (4,4',5,5') umfasst, dass durch die Gegenläufigkeit der Drehrichtungen (7,7') der Mäh- und Fördertrommeln (4,4',5,5') eines Mäh- und Fördertrommelpaares (8;8') sich die benachbarten Mäh- und Fördertrommelpaare (8;8') näherungsweise tangieren und dort einen Übergabebereich (21) definieren, innerhalb dessen der Gutstrom von der weiter außenliegenden zur weiter innenliegenden Mäh- und Fördertrommel (4,4',5,5') mittels eines Ausräumerelementes 20 übergeben wird, so dass die Förderrichtung des Gutstromes (9,9') während der Übergabe erhalten bleibt.

2. Vorsatzgerät (1) nach Anspruch 1, **dadurch gekennzeichnet, dass** die Mäh- und Fördertrommeln (4,4',5,5') eines Mäh- und Fördertrommelpaars (8,8') gleiche Konturkreisdurchmesser (18 oder 19) aufweisen.

3. Vorsatzgerät (1) nach Anspruch 1, **dadurch gekennzeichnet, dass** die Mäh- und Fördertrommeln (4, 5'; 5, 4'; 4', 5; 5', 4) eines Mäh- und Fördertrommelpaars (8, 8') unterschiedliche Konturkreisdurchmesser (18 oder 19) aufweisen.

4. Vorsatzgerät (1) nach Anspruch 1 bis 3, **dadurch gekennzeichnet, dass** die Konfiguration des Mäh- und Fördertrommelpaars (8,8') eine Basis für eine modulare Baureihe mit dem Modul m = dₘᵢₙ von Vorsatzgeräten (1) darstellt.

5. Vorsatzgerät (1) nach Anspruch 4, **dadurch gekennzeichnet, dass** der kleinste theoretische Konturkreisdurchmesser dₘᵢₙ der kleinsten Mäh- und Einzugstrommel (5,5') den Modul m einer Baureihe darstellt.

6. Vorsatzgerät (1) nach Anspruch 4, **dadurch gekennzeichnet, dass** der größte theoretische Konturkreisdurchmesser dₘₐₓ den zweifachen Wert des kleinsten theoretischen Konturkreisdurchmessers dₘᵢₙ beträgt.

7. Vorsatzgerät (1) nach Anspruch 4, **dadurch gekennzeichnet, dass** die Arbeitsbreite (6) des Vorsatzgerätes (1) der Reihenfunktion A= 4x m, (mit x=1 bis n und n = ganzzahlig und m = Modul der Baureihe) gehorcht.

## Claims

1. Auxiliary device (1) for agricultural harvesting machines, in particular for forage harvesters, for the mowing, gathering and further guiding of a stalk-type harvested produce flow into the intake gap of the intake housing of the processing harvesting machine, with a number, amounting to at least two each, of mowing and feeding drums (4,4',5,5') spaced apart on both sides of the vertical longitudinal central plane and driven in a rotary manner around vertical axes and in parts in opposite directions to each other, wherein the number of mowing and feeding drums (4,4',5,5') is an integer multiple of four and comprises at least four mowing and feeding drum pairs (8,8'), wherein the number of mowing and feeding drum pairs (8,8') amounts to half the number of mowing and feeding drums (4,4',5,5'), and wherein the produce flow (9,9') is fed to the intake gap (12) in a meandering manner, starting from the, in each case outer, mowing and feeding drum (4,4',5,5') which is furthest away from the vertical longitudinal central plane of the auxiliary device (1), **characterized in that** each mowing and feeding drum pair (8,8') comprises two mowing and feeding drums (4,4',5,5') which are driven in a rotary manner in opposite directions to each other, and **in that**, because of the opposing nature of the directions of rotation (7,7') of the mowing and feeding drums (4,4',5,5') of a mowing and feeding drum pair (8;8'), the adjacent mowing and feeding drum pairs (8;8') are approximately tangential to each other and define there a transfer area (21), inside which the produce flow is transferred from the mowing and feeding drum (4,4',5,5') which lies further out to that which lies further in by means of a scraper element 20, with the result that the feeding direction of the produce flow (9,9') is preserved during the transfer.

2. Auxiliary device (1) according to claim 1, **characterized in that** the mowing and feeding drums (4,4',5,5') of a mowing and feeding drum pair (8,8') have equal circular contour diameters (18 or 19).

3. Auxiliary device (1) according to claim 1, **characterized in that** the mowing and feeding drums (4, 5'; 5, 4'; 4', 5; 5', 4) of a mowing and feeding drum pair (8, 8') have different circular contour diameters (18 or 19).

4. Auxiliary device (1) according to claims 1 to 3, **characterized in that** the configuration of the mowing and feeding drum pair (8,8') represents a basis for a modular construction series of front attachments (1) with the modulus m = dₘᵢₙ.

5. Auxiliary device (1) according to claim 4, **characterized in that** the smallest theoretical circular contour diameter dₘᵢₙ of the smallest mowing and intake drum (5,5') represents the modulus m of a construction series.

6. Auxiliary device (1) according to claim 4, **characterized in that** the largest theoretical circular contour diameter dₘₐₓ is twice the value of the smallest theoretical circular contour diameter dₘᵢₙ.

7. Auxiliary device (1) according to claim 4, **characterized in that** the working width (6) of the front attachment (1) conforms to the series function A= 4x * m, (with x=1 to n and n = integer and m = modulus of the construction series).

## Revendications

1. Outil frontal (1) pour machines agricoles de récolte, en particulier pour ensileuses, pour faucher, ramasser et transférer un flux de produit de récolte en tiges dans la fente d'alimentation du carter d'alimentation de la machine de récolte assurant le traitement ultérieur, comprenant un nombre de chaque fois au moins deux tambours de fauche et d'alimentation (4, 4', 5, 5') espacés de part et d'autre du plan médian longitudinal vertical, tournant autour d'axes verticaux et entraînés en sens contraire l'un par rapport à l'autre par paires, le nombre de tambours de fauche et d'alimentation (4, 4', 5, 5') étant égal à un multiple entier du chiffre quatre et comprenant au moins quatre paires de tambours de fauche et d'alimentation (8, 8'), le nombre de paires de tambours de fauche et d'alimentation (8, 8') étant égal à la moitié du nombre de tambours de fauche et d'alimentation (4, 4', 5, 5'), et le flux de produit (9, 9') étant amené à la fente d'alimentation (12) de manière sinueuse en partant du tambour de fauche et d'alimentation (4, 4', 5, 5') le plus éloigné du plan médian longitudinal vertical de l'outil frontal (1), respectivement le plus extérieur, **caractérisé en ce que** chaque paire de tambours de fauche et d'alimentation (8, 8') comprend deux tambours de fauche et d'alimentation (4, 4', 5, 5') entraînés en rotation en sens contraire l'un par rapport à l'autre, **en ce que**, du fait de la nature contraire des sens de rotation (7, 7') des tambours de fauche et d'alimentation (4, 4', 5, 5') d'une paire de tambours de fauche et d'alimentation (8, 8'), les paires de tambours de fauche et d'alimentation (8, 8') adjacentes se touchent approximativement et définissent à cet endroit une zone de transfert (21) à l'intérieur de laquelle le flux de produit est transféré du tambour de fauche et d'alimentation (4, 4', 5, 5') plus extérieur au tambour de fauche et d'alimentation (4, 4', 5, 5') plus intérieur au moyen d'un élément d'évacuation 20, de sorte que le sens de transport du flux de produit (9, 9') est maintenu pendant le transfert.

2. Outil frontal (1) selon la revendication 1, **caractérisé en ce que** les tambours de fauche et d'alimentation (4, 4', 5, 5') d'une paire de tambours de fauche et d'alimentation (8, 8') présentent des diamètres de cercle de contour (18 ou 19) égaux.

3. Outil frontal (1) selon la revendication 1, **caractérisé en ce que** les tambours de fauche et d'alimentation (4, 5' ; 5, 4' ; 4', 5 ; 5', 4) d'une paire de tambours de fauche et d'alimentation (8, 8') présentent des diamètres de cercle de contour (18 ou 19) différents.

4. Outil frontal (1) selon les revendications 1 à 3, **caractérisé en ce que** la configuration des paires de tambours de fauche et d'alimentation (8, 8') représente une base pour une série de construction modulaire de module m = dₘᵢₙ d'outils frontaux (1).

5. Outil frontal (1) selon la revendication 4, **caractérisé en ce que** le plus petit diamètre de cercle de contour théorique dₘᵢₙ du plus petit tambour de fauche et d'alimentation (5, 5') représente le module m d'une série de construction.

6. Outil frontal (1) selon la revendication 4, **caractérisé en ce que** le plus grand diamètre de cercle de contour théorique dₘₐₓ est égal au double du plus petit diamètre de cercle de contour théorique dₘᵢₙ.

7. Outil frontal (1) selon la revendication 4, **caractérisé en ce que** la largeur de travail (6) de l'outil frontal (1) obéit à la fonction de série A = 4x * m, (avec x = 1 à n et n = nombre entier et m = module de la série de construction).
